# EUROPÄISCHE PATENTSCHRIFT

(11) **EP 3 721 536 B1**
(45) Veröffentlichungstag und Bekanntmachung des Hinweises auf die Patenterteilung: **12.01.2022**
(21) Anmeldenummer: 19706897.6
(22) Anmeldetag: 07.02.2019
(51) Int. Cl.: H02K 15/00, H02K 17/16

(54) **VERBINDUNG VON KURZSCHLUSSRING UND KÄFIGSTAB FÜR EINEN KURZSCHLUSSKÄFIG**
CONNECTION OF SHORT CIRCUIT RING AND CAGE ROD FOR A SHORT-CIRCUIT CAGE
RACCORDEMENT DE BAGUE DE COURT-CIRCUIT ET BARRE DE CAGE POUR UNE CAGE EN COURT-CIRCUIT

(30) Priorität: 20.03.2018 EP 18162859
(43) Veröffentlichungstag der Anmeldung: 14.10.2020
(73) Patentinhaber: Siemens Aktiengesellschaft, 80333 München (DE)
(72) Erfinder: MÜLLER, Jörg, 97720 Nüdlingen (DE); SCHNEIDER, Alexandra, 97618 Heustreu (DE)
(86) Internationale Anmeldenummer: PCT/EP2019/052977
(87) Internationale Veröffentlichungsnummer: WO 2019/179693

(56) Entgegenhaltungen:
- EP-A1- 3 540 923
- CN-Y- 2 817 195
- DE-A1-102012 202 725
- DE-A1-102012 220 794
- GB-A- 231 462
- JP-A- H0 638 469
- JP-A- H0 698 510
- JP-A- H09 168 264
- JP-B2- 5 461 940
- US-A- 995 469
- US-A- 1 371 569
- US-A- 1 371 570

## Beschreibung

Die Erfindung betrifft einen Kurzschlussring für einen Kurzschlusskäfig einer dynamoelektrischen rotatorischen Maschine, wobei der Kurzschlussring wenigstens eine Vertiefung aufweist.

Die Druckschrift DE 10 2012 220 794 A1 beschreibt ein Verfahren zum Ausbilden eines Rotors, wobei der Rotor mehrere Leiterstäbe enthält, die jeweils mit einem Kurzschlussring zusammengefügt sind, umfasst, dass ein Ende jedes der mehreren Leiterstäbe in einem jeweiligen von mehreren Hohlräumen, die vom Kurzschlussring definiert sind, angeordnet wird. Das Verfahren umfasst außerdem, dass nach dem Anordnen das Ende jedes der Leiterstäbe deformiert wird und das Ende jedes der Leiterstäbe mit dem Kurzschlussring verlötet wird, um den Rotor auszubilden. Ein Rotor umfasst einen Kurzschlussring, der darin mehrere Hohlräume definiert, die jeweils eine Form aufweisen, mehrere Leiterstäbe, die jeweils ein Ende aufweisen, das in einem jeweiligen der Hohlräume angeordnet ist und mit dem Kurzschlussring zusammengefügt ist, wobei das Ende zu der Form deformierbar ist, und ein Lötmaterial, das in Kontakt mit dem Ende jedes der Leiterstäbe in einem jeweiligen der Hohlräume angeordnet ist.

Die Druckschrift JP H0638469 A behandelt eine stabile Herstellung eines Käfigrotors eines Motors mit geringer Vibration und geringem Geräusch, indem eine Positionsabweichung eines im Rotor des Motors zu befestigenden Gewichts verhindert wird, in dem ein Unwuchtausgleichsgewicht montiert ist. Es wird beschrieben: Wenn ein Vorsprung an einer Endfläche einer Verstemmungsvorrichtung und eine Aussparung an einer Endfläche eines Verstemmungsstifts zur Befestigung eines Gewichts vorgesehen ist, wird der Vorsprung der Vorrichtung in die Aussparung des Stifts eingeführt, wenn der Stift durch die Vorrichtung gequetscht und verformt wird, und das Gewicht kann ohne abweichende Zentren der Vorrichtung und des Stifts befestigt werden. Durch dieses Verfahren wird das Gewicht in einer normalen Position fixiert, die Abweichung eines Schwerpunkts wird eliminiert, ein für das Gewicht erwartetes Moment wird sichergestellt, und ein Käfigrotor für einen Motor mit geringer Vibration und geringem Geräusch kann stabil hergestellt werden.

Die Druckschrift EP 3 540 923 A1 fällt unter Art. 54 (3) EPÜ und betrifft ein Verfahren zur Herstellung eines Käfigläufers einer Asynchronmaschine durch folgende Schritte: Bereitstellen eines zumindest abschnittsweise magnetisch leitfähigen Grundkörpers mit im Wesentlichen axial verlaufenden Nuten; Einsetzen von elektrischen Leitern in die Nuten derart, dass diese Leiter aus den axialen Stirnseiten des magnetisch leitfähigen Grundkörpers ragen; Positionieren von elektrisch leitfähigen Kurzschlussringen, die mehrere Ausnehmungen zur Aufnahme der jeweiligen Leiter aufweisen; elektrisches Kontaktieren der Leiter mit den Kurzschlussringen durch ein oder mehrere AM-Verfahren.

Zur Bildung eines Kurzschlusskäfigs wird üblicherweise ein Kurzschlussring mit Käfigstäben mittels Löten, insbesondere Hartlöten, Kupferdruckguss oder Schweißen verbunden.

Nachteilig hierbei ist jedoch, dass hierzu aufwendige Vorrichtungen benötigt werden.

Der Erfindung liegt die Aufgabe zugrunde, die Bildung eines Kurzschlusskäfigs zu vereinfachen.

Die Lösung der Aufgabe gelingt durch die Merkmale des Anspruchs 1, d. h. einen Kurzschlussring für einen Kurzschlusskäfig einer dynamoelektrischen rotatorischen Maschine, wobei der Kurzschlussring wenigstens eine Vertiefung aufweist, wobei der Kurzschlussring mittels der Vertiefung mit wenigstens einem aus einem Rotorpaket der dynamoelektrischen rotatorischen Maschine herausragenden Käfigstab mechanisch und elektrisch verbindbar ist, wobei der Kurzschlussring mit dem Käfigstab mittels Stauchung des

Käfigstabs durch die Erhebung verbindbar ist.

Ferner gelingt die Lösung der Aufgabe durch die Merkmale des Anspruchs 10, d. h. ein Verfahren zum Verbinden eines derartigen Kurzschlussrings mit wenigstens einem Käfigstab, vorzugsweise mit wenigstens zwei Käfigstäben, zur Bildung eines Kurzschlusskäfigs.

Zudem gelingt die Lösung der Aufgabe durch die Merkmale des Anspruchs 11, d. h. ein Verfahren zum Verbinden eines derartigen Kurzschlussrings mit wenigstens einem Käfigstab, vorzugsweise mit wenigstens zwei Käfigstäben, zur Bildung eines Kurzschlusskäfigs.

Kurzschlusskäfige finden hauptsächlich Anwendung bei Rotoren von Drehstrom-Asynchronmaschinen.

Weitere vorteilhafte Ausführungsformen ergeben sich aus den Unteransprüchen.

Erfindungsgemäß ist der Kurzschlussring mit dem Käfigstab mittels Stauchung des Käfigstabs verbindbar.

Vorzugsweise weist der Kurzschlussring ein erstes Material, vorzugsweise Kupfer, Aluminium, Stahl oder deren Legierungen, auf. Vorzugsweise weist der Käfigstab ein gegenüber dem ersten Material weicheres zweites Material, vorzugsweise eine Aluminiumlegierung oder eine Kupferlegierung, auf.

Aluminium bzw. eine Aluminiumlegierung weist eine geringere elektrische Leitfähigkeit auf als Kupfer, ist aber preisgünstig. Kupfer bzw. eine Kupferlegierung weist eine hohe elektrische Leitfähigkeit auf, ist jedoch teuer. Für performante dynamoelektrische rotatorische Maschinen, z. B. High Torque-Motoren, wird vorteilhaft Kupfer verwendet.

In einer weiteren vorteilhaften Ausführungsform der Erfindung weist der Kurzschlussring wenigstens zwei Vertiefungen auf, wobei eine Anzahl an Vertiefungen einer Anzahl an Käfigstäben entspricht.

Vorteilhaft hängt die Anzahl von einer Nutzahl der dynamoelektrische rotatorische Maschine ab.

In einer weiteren vorteilhaften Ausführungsform der Erfindung ist die Vertiefung an einer dem Rotorpaket zugewandten Rückseite des Kurzschlussrings ausgebildet.

In einer weiteren vorteilhaften Ausführungsform der Erfindung ist auf einer Grundfläche der Vertiefung eine Erhebung ausgebildet.

In einer weiteren vorteilhaften Ausführungsform der Erfindung ist die Erhebung spitz zulaufend ausgebildet.

In einer weiteren vorteilhaften Ausführungsform der Erfindung ist eine Längsachse der Erhebung wenigstens im Wesentlichen rechtwinklig zur Grundfläche der Vertiefung ausgebildet.

In einer weiteren vorteilhaften Ausführungsform der Erfindung ist die Erhebung in den Käfigstab einstechbar.

In einer weiteren vorteilhaften Ausführungsform der Erfindung ist die Erhebung als Dorn ausgebildet.

Der Dorn ist vorteilhaft eine spitz zulaufende Erhebung.

Ferner sind auch andere Formen möglich, z. B. eine Erhebung mit zwei oder mehr Spitzen.

In einer weiteren vorteilhaften Ausführungsform der Erfindung ist die Vertiefung an einer dem Rotorpaket abgewandten Vorderseite des Kurzschlussrings ausgebildet.

In einer weiteren vorteilhaften Ausführungsform der Erfindung ist eine Öffnung an einer Rückseite des Kurzschlussrings ausgebildet.

In einer weiteren vorteilhaften Ausführungsform der Erfindung ist die Öffnung an einer Grundfläche der Vertiefung ausgebildet.

In einer weiteren vorteilhaften Ausführungsform der Erfindung ist die Grundfläche der Vertiefung größer als eine Grundfläche der Öffnung.

In einer weiteren vorteilhaften Ausführungsform der Erfindung sind die Öffnung und die Vertiefung zu einer Aufnahme des Käfigstabs ausgestaltet.

Das erfindungsgemäße Verfahren zum Verbinden eines Kurzschlussrings mit wenigstens einem Käfigstab, vorzugsweise mit wenigstens zwei Käfigstäben, zur Bildung eines Kurzschlusskäfigs umfasst folgende Schritte:
- Anordnen von Kurzschlussring und Käfigstab aneinander
- Ausüben von Druckkraft auf den Kurzschlussring mit einer Kraftwirkung wenigstens im Wesentlichen in Richtung der Maschinenachse
- Eindringen der spitz zulaufenden Erhebung in den Käfigstab
- Verformen des Käfigstabs durch Stauchung
- Erzeugen einer formschlüssigen Verbindung von Kurzschlussring und Käfigstab

Vorzugsweise werden der Kurzschlussring und der Käfigstab unmittelbar aneinander angeordnet.

Ferner ist das Verfahren auch für einen beabstandeten Kurzschlussring geeignet. In einer vorteilhaften Ausführungsform werden der Kurzschlussring und der Käfigstab mit einem Abstand zueinander angeordnet. Vorteilhaft weisen die Käfigstäbe eine Länge auf, die die beabstandete Anordnung des Kurzschlussrings ermöglicht. Die bereits beschriebenen Schritte Ausüben von Druckkraft auf den Kurzschlussring, Eindringen der spitz zulaufenden Erhebung in den Käfigstab, Verformung durch Stauchung und Erzeugen der formschlüssigen Verbindung sind auch für die Verbindung des Kurzschlussrings mit wenigstens einem Käfigstab geeignet.

Vorzugsweise wird die Druckkraft auf den Kurzschlussring mit einem Stempel aufgebracht. Der Stempel kann auch als Platte, insbesondere Druckplatte, ausgeführt sein.

Durch das Verfahren können Kurzschlusskäfige für Rotoren von Asynchronmaschinen nur mit Ausüben von Kraft, insbesondere Druckkraft, mittels Pressen gefügt werden.

Das weitere erfindungsgemäße Verfahren zum Verbinden eines Kurzschlussrings mit wenigstens einem Käfigstab, vorzugsweise mit wenigstens zwei Käfigstäben, zur Bildung eines Kurzschlusskäfigs umfasst folgende Schritte:
- Führen des Käfigstabs durch die Öffnung und die Vertiefung bis der Käfigstab aus der Vertiefung ragt
- Ausüben von Druckkraft auf den Käfigstab mit einer Kraftwirkung wenigstens im Wesentlichen in Richtung der Maschinenachse
- Verformen des Käfigstabs durch Stauchung
- Erzeugen einer formschlüssigen Verbindung von Kurzschlussring und Käfigstab

In einer weiteren vorteilhaften Ausführungsform der Erfindung wird die Vertiefung vom verformten Käfigstab nahezu vollständig oder vollständig gefüllt.

Der gestauchte Käfigstab kann jedoch auch wie eine Niete ausgebildet sein und über die Vertiefung hinausreichen.

Vorzugsweise wir an einem vorderen axialen Ende des Rotorpakets als auch an einem hinteren axialen Ende des Rotorpakets ein Kurzschlussring angebracht.

Vorzugsweise umfasst das Rotorpaket - vorzugsweise als Blechpaket ausgeführt - einzelne Bleche mit Nuten. Durch Stanzpaketieren kann das Blechpaket aus einzelnen Blechen gefertigt werden. Alternativ kann das Blechpaket durch Stapeln der Bleche auf einem Fädeldorn hergestellt werden.

Eine Anzahl der Nuten entspricht vorzugsweise der gewünschten Anzahl an Käfigstäben. Die Käfigstäbe - vorzugsweise aufweisend Aluminium, Kupfer oder deren Legierungen - werden in die Nuten eingezogen.

Die Erfindung bietet den Vorteil, dass beim Herstellen von Rotoren von Asynchronmaschinen keine teuren Werkzeuge und Fertigungsanlagen benötigt werden. Die Erfindung ermöglicht eine mit nur wenig Aufwand verbundene Herstellung. Ferner sind keine weiteren Fertigungsmittel wie beispielsweise Lot oder Kupfer bzw. Aluminium nötig. Zudem kann Energie gespart werden, da keine Erwärmung des Lots zum Löten oder des Kupfers bzw. Aluminium für die Verbindung mittels Kupfer- bzw. Aluminium-Druckguss notwendig ist.

Die Erfindung ist insbesondere gut geeignet für geringe Stückzahlen von Rotoren.

Vorteilhaft werden die Käfigstäbe mit einer Spielpassung und/oder einer Übermaßpassung in das Blechpaket eingebracht. Beim Verbinden des Kurzschlussrings mit einem bzw. mit allen Käfigstäben ist das Blechpaket vorteilhaft zwangsgeführt, damit die Druckkraft optimal verteilt aufgebracht werden kann, d. h. vorteilhaft in Richtung der Maschinenachse.

Die Käfigstäbe sind vorteilhaft in Nuten des Blechpakets eingebracht. Beim Aufbringen der Druckkraft können sie sich vorteilhaft nur außerhalb des Blechpakets, also im Bereich, der an den Kurzschlussring angrenzt, verformen bzw. gestaucht werden.

Dies hat den Vorteil, dass das Blechpaket sich nicht verschieben kann. Somit kann eine Verdrehung und/oder Verformung der Käfigstäbe und/oder des Blechpakets vermieden werden.

Im Folgenden wird die Erfindung anhand der in den Figuren dargestellten Ausführungsbeispiele näher beschrieben und erläutert. Es zeigen:
- FIG 1: eine Ausgestaltung eines Kurzschlussrings 1 mit einer Vertiefung, an deren Grundfläche ein Dorn 3 ausgebildet ist,
- FIG 2: einen Ausschnitt aus FIG 1,
- FIG 3: eine formschlüssige Verbindung von Kurzschlussring und Käfigstab,
- FIG 4: eine Ausgestaltung eines Kurzschlussrings mit einer Vertiefung an einer Vorderseite des Kurzschlussrings und einer Öffnung an einer Rückseite des Kurzschlussrings,
- FIG 5: einen Ausschnitt aus FIG 4,
- FIG 6: eine formschlüssige Verbindung von Kurzschlussring und Käfigstab,
- FIG 7: einen beispielhaften Ablauf eines Verfahrens zum Verbinden des Kurzschlussrings mit wenigstens einem Käfigstab,
- FIG 8: einen beispielhaften alternativen Ablauf eines Verfahrens zum Verbinden eines Kurzschlussrings mit wenigstens einem Käfigstab.

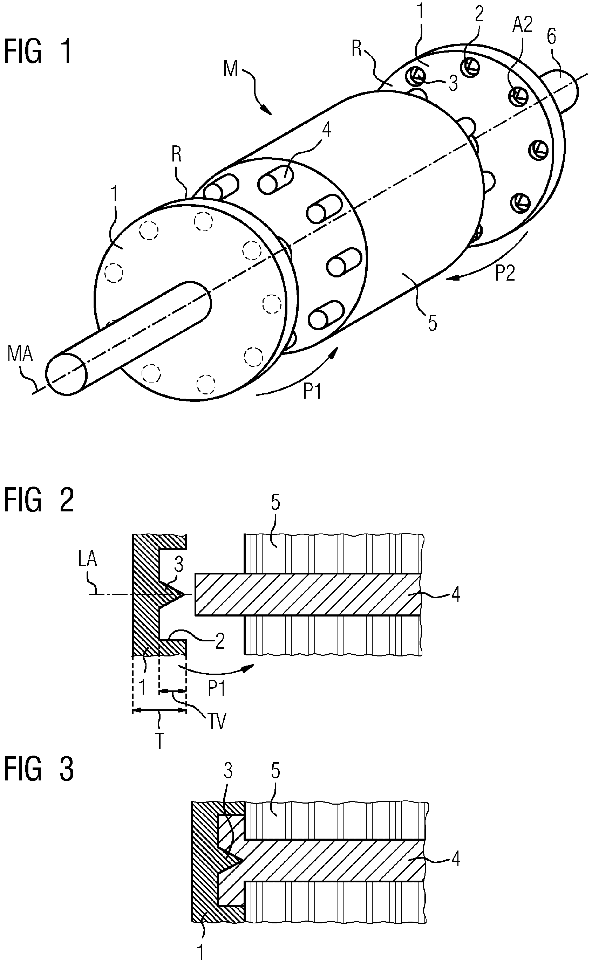

FIG 1 zeigt eine Ausgestaltung eines Kurzschlussrings 1 mit einer Vertiefung 2, an deren Grundfläche A2 ein Dorn 3 ausgebildet ist.

Der Dorn 3 ist eine bevorzugte Ausführungsform einer Erhebung. Der Dorn 3 ist spitz zulaufend ausgebildet. Eine Längsachse LA des Dorns ist in der Figur rechtwinklig zur Grundfläche A2 der Vertiefung 2 ausgebildet. In anderen Worten: Die Längsachse LA (siehe FIG 2) des Dorns 3 ist in der Figur parallel zur Maschinenachse MA angeordnet.

Der Kurzschlussring 1 ist Teil eines Kurzschlusskäfigs einer dynamoelektrischen rotatorischen Maschine M. Der Kurzschlussring 1 ist insbesondere Teil des Kurzschlusskäfigs eines Rotors einer Maschine M.

Die Vertiefung 2 dient einer mechanischen und elektrischen Verbindung von Kurzschlussring 1 und wenigstens einem Käfigstab 4. Der Käfigstab 4 ragt in der Figur aus einem Rotorpaket 5, vorzugsweise als Blechpaket ausgeführt, heraus.

Der Käfigstab 4 ist vorzugsweise parallel zur Maschinenachse angeordnet. Jedoch ist auch eine geschrägte Anordnung möglich, d. h. dass zwischen der Maschinenachse und einer Längsachse des Käfigstabs ein Winkel zwischen 0° und 90° besteht.

Der Käfigstab 4 wird gestaucht, indem der Kurzschlussring 1 mit Druckkraft beaufschlagt wird und auf das Rotorpaket 5 gepresst wird. Dies ist mit den Pfeilen P1 und P2 dargestellt. Der Dorn 3 sticht in ein Ende des Käfigstabs 4 ein.

Dies hat folgende Vorteile: Eine Spitze des Dorns in den Käfigstab 4 ermöglicht eine genaue Positionierung des Dorns 3 am Käfigstab 4. Durch die Spitze kann sich der Kurzschlussring 1 während des Pressens nicht verschieben. Zudem ist die Verbindung nach dem Pressen besonders strapazierfähig und widerstandsfähig, wenn die Spitze im Käfigstab 4 eingestochen ist.

Der Käfigstab 4 weist vorteilhaft weicheres Material auf als der Kurzschlussring 1, damit die Stauchung gelingt.

Die Figur zeigt, dass eine Anzahl an Vertiefungen 2 einer Anzahl an Käfigstäben 4 entspricht.

Die Vertiefungen 2 samt Dorn 3 sind in der Figur an einer Rückseite R des Kurzschlussrings 1 ausgebildet. Die Rückseite R ist die dem Rotorpaket abgewandte Seite des Kurzschlussrings 1.

Die Rückseite R ist in der Figur eine Fläche des Kurzschlussrings 1, die an das Rotorpaket 5 angrenzt bzw. bei einem beabstandeten Kurzschlussring (nicht in der Figur gezeigt) in Richtung des Rotorpakets 5 zeigt.

Die Figur zeigt zudem eine Welle 6.

FIG 2 zeigt einen Ausschnitt aus FIG 1.

Der Kurzschlussring 1 wird in Richtung des Pfeils P1 auf das Rotorpaket 5 gepresst. Der Dorn 3 sticht in den Käfigstab 4 ein. Der Käfigstab 4 verformt sich bzw. wird gestaucht und füllt die Vertiefung 2.

Vorteilhaft weist die Vertiefung eine Tiefe TV von 10% bis 90%, vorzugsweise von 40% bis 60%, bezogen auf eine Gesamttiefe T des Kurzschlussrings 1 auf.

Der Dorn 3 ist derart ausgebildet, dass seine Spitze nicht über die Rückseite des Kurzschlussrings 1 hinausragt. Jedoch kann der Dorn auch über die Rückseite hinausragend ausgebildet sein. Ferner kann der Dorn auch kürzer ausgebildet sein, also nicht bis zur Rückseite reichen.

FIG 3 zeigt eine formschlüssige Verbindung von Kurzschlussring 1 und Käfigstab 4.

Die Figur zeigt die Verbindung nachdem der Käfigstab 4 gestaucht wurde, indem der Kurzschlussring 1 mit Druckkraft beaufschlagt wurde und auf das Rotorpaket 5 gepresst wurde. Der in den Käfigstab 4 eingestochene Dorn 3 bewerkstelligt eine widerstandsfähige Verbindung.

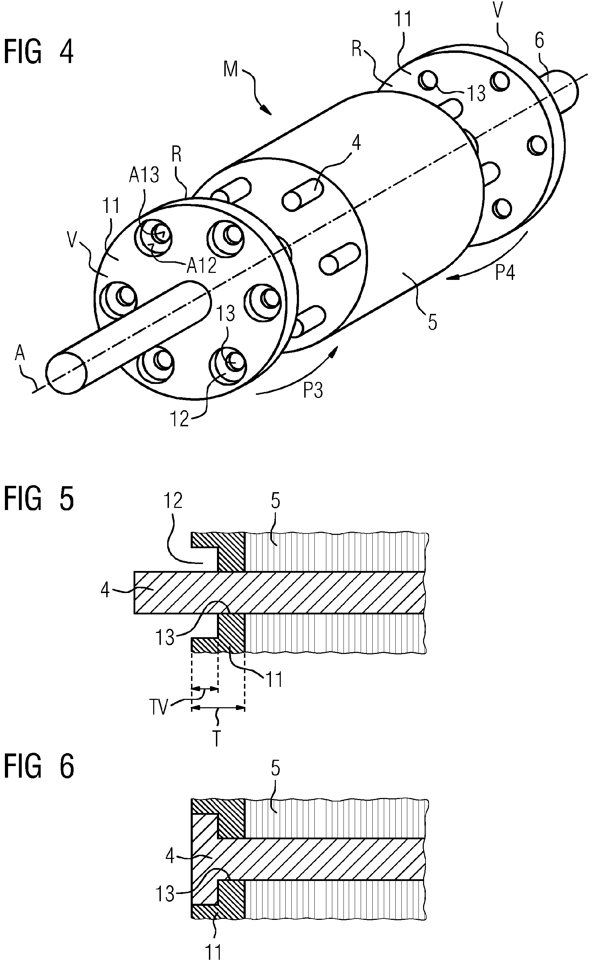

FIG 4 zeigt eine Ausgestaltung eines Kurzschlussrings 11 mit einer Vertiefung 12 an einer Vorderseite V des Kurzschlussrings 11 und einer Öffnung 13 an einer Rückseite R des Kurzschlussrings 11.

Die Vorderseite V ist die dem Rotorpaket 5 abgewandte Seite des Kurzschlussrings 11. Die Rückseite R ist die dem Rotorpaket 5 zugewandte Seite des Kurzschlussrings 11.

Die Rückseite R ist in der Figur eine Fläche des Kurzschlussrings 11, die an das Rotorpaket 5 angrenzt bzw. bei einem beabstandeten Kurzschlussring (nicht in der Figur gezeigt) in Richtung des Rotorpakets 5 zeigt.

Der Kurzschlussring 11 ist Teil eines Kurzschlusskäfigs einer dynamoelektrischen rotatorischen Maschine M. Der Kurzschlussring 11 ist insbesondere Teil des Kurzschlusskäfigs des Rotors einer Maschine M.

Die Figur zeigt zudem eine Welle 6.

Die Vertiefung 12 dient einer Verbindung von Kurzschlussring 11 und wenigstens einem Käfigstab 4. Der Käfigstab 4 ragt in der Figur aus einem Rotorpaket 5 heraus.

Die Öffnung 13 grenzt in der Figur an die Vertiefung 12 an. Eine Grundfläche A12 der Vertiefung ist in der Figur größer als eine Grundfläche der Öffnung A13.

Der Käfigstab 4 wird von der Öffnung 13 und der Vertiefung 12 aufgenommen. Der Käfigstab 4 weist eine gewisse Länge auf, sodass er auch nach einem Aufsetzen des Kurzschlussrings 11 auf das Rotorpaket 5 aus der Vertiefung 12 herausragt (siehe hierzu auch FIG 5).

Der Käfigstab 4 wird gestaucht, indem er mit Druckkraft beaufschlagt wird und auf das Rotorpaket 5 gepresst wird. Dies ist mit den Pfeilen P3 und P4 dargestellt. Der Dorn 3 sticht in ein Ende des Käfigstabs 4 ein.

Der Käfigstab 4 weist vorteilhaft weicheres Material auf als der Kurzschlussring 11, damit die Stauchung gelingt.

Die Figur zeigt, dass eine Anzahl an Vertiefungen 12 einer Anzahl an Käfigstäben 4 entspricht.

FIG 5 zeigt einen Ausschnitt aus FIG 4.

Der Kurzschlussring 11 wird auf das Rotorpaket 5 gesetzt. Der Käfigstab 4 ragt über den Kurzschlussring 11 hinaus. Der Käfigstab 4 weist in der Figur wenigstens im Wesentlichen einen Durchmesser der Öffnung 13 auf, weshalb diese bereits formschlüssig verbunden sind.

Vorteilhaft weist die Vertiefung die Tiefe TV von 10% bis 90%, vorzugsweise von 40% bis 60%, bezogen auf die Gesamttiefe T des Kurzschlussrings 1 auf.

Der Käfigstab 4 wird mit Druck beaufschlagt. Der Käfigstab 4 wird gestaucht und füllt die Vertiefung 12.

FIG 6 zeigt eine formschlüssige Verbindung von Kurzschlussring 11 und Käfigstab 4.

Die Figur zeigt die Verbindung nachdem der Käfigstab 4 mittels Beaufschlagung mit Druckkraft gestaucht und auf das Rotorpaket 5 gepresst wurde.

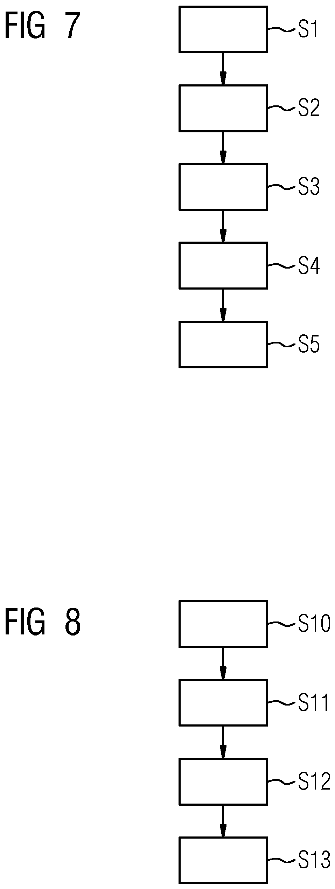

FIG 7 zeigt einen beispielhaften Ablauf eines Verfahrens zum Verbinden des Kurzschlussrings mit wenigstens einem Käfigstab.

Vorzugsweise wird der Kurzschlussring mit wenigstens zwei Käfigstäben verbunden und so ein Kurzschlusskäfig gebildet. Beispielhaft sind in der FIG 1 neun Käfigstäbe dargestellt.

In einem Verfahrensschritt S1 werden der Kurzschlussring und der Käfigstab aneinander angeordnet. Vorzugsweise werden der Kurzschlussring und der Käfigstab unmittelbar aneinander angeordnet. Jedoch ist auch eine Beabstandung des Kurzschlussrings möglich.

In einem Verfahrensschritt S2 wird Druckkraft, beispielsweise mittels eines Stempels, auf den Kurzschlussring mit einer Kraftwirkung wenigstens im Wesentlichen in Richtung der Maschinenachse ausgeübt.

In einem Verfahrensschritt S3 dringt die spitz zulaufende Erhebung in den Käfigstab ein. In anderen Worten: Es wird mit dem Dorn in den Käfigstab eingestochen.

In einem Verfahrensschritt S4 wird der Käfigstab verformt, insbesondere gestaucht.

Mittels des Verfahrens werden vorzugsweise alle Käfigstäbe gleichzeitig oder zumindest nahezu gleichzeitig mit dem Kurzschlussring verbunden.

In einem Verfahrensschritt S5 erfolgt eine formschlüssige Verbindung von Kurzschlussring und Käfigstab.

FIG 8 zeigt einen beispielhaften alternativen Ablauf eines Verfahrens zum Verbinden eines Kurzschlussrings mit wenigstens einem Käfigstab.

Vorzugsweise wird der Kurzschlussring mit wenigstens zwei Käfigstäben verbunden und so ein Kurzschlusskäfig gebildet. Beispielhaft sind in der FIG 4 sechs Käfigstäbe gezeigt.

In einem Verfahrensschritt S10 erfolgt ein Führen des Käfigstabs durch die Öffnung und die Vertiefung bis der Käfigstab aus der Vertiefung ragt. Der Kurzschlussring und der Käfigstab werden auf diese Weise zusammengesetzt. Der Käfigstab ragt schließlich aus der Vertiefung heraus.

Vorzugsweise werden der Kurzschlussring und der Käfigstab unmittelbar aneinander angeordnet. Jedoch ist auch eine Beabstandung des Kurzschlussrings möglich.

In einem Verfahrensschritt S11 wird Druckkraft, beispielsweise mittels eines Stempels, auf den Käfigstab mit einer Kraftwirkung wenigstens im Wesentlichen in Richtung der Maschinenachse ausgeübt.

In einem Verfahrensschritt S12 wird der Käfigstab verformt, insbesondere gestaucht.

In einem Verfahrensschritt S13 sind der Kurzschlussring und wenigstens ein Käfigstab formschlüssig verbunden.

Mittels des Verfahrens kann je nur ein Käfigstab mit dem Kurzschlussring verbunden werden. Das Verfahren wird hierbei so oft wiederholt, bis mehrere, vorzugsweise alle, Käfigstäbe mit dem Kurzschlussring verbunden sind. Jedoch ist es auch möglich, alle Käfigstäbe gleichzeitig mit Druckkraft zu beaufschlagen.

Vorteilhaft werden die Kurzschlussringe an beiden Enden des Rotors auf die gleiche Weise (entweder das in FIG 7 gezeigte Verfahren oder das in FIG 8 gezeigte verfahren) mit den Käfigstäben verbunden. Jedoch können die beschriebenen Verfahren miteinander oder auch mit anderen Verfahren kombiniert werden.

## Patentansprüche

1. Kurzschlussring (1,11) für einen Kurzschlusskäfig einer dynamoelektrischen rotatorischen Maschine (M), wobei der Kurzschlussring (1,11) wenigstens eine Vertiefung (2,12) aufweist, wobei der Kurzschlussring (1,11) mittels der Vertiefung (2,12) mit wenigstens einem aus einem Rotorpaket (5) der dynamoelektrischen rotatorischen Maschine (M) herausragenden Käfigstab (4) mechanisch und elektrisch verbindbar ist, wobei auf einer Grundfläche (A2) der Vertiefung eine Erhebung (3) ausgebildet ist, wobei der Kurzschlussring (1,11) mit dem Käfigstab (4) mittels Stauchung des Käfigstabs (4) durch die Erhebung (3) verbindbar ist.

2. Kurzschlussring (1,11) nach Anspruch 1, wobei der Kurzschlussring (1,11) wenigstens zwei Vertiefungen (2,12) aufweist, wobei eine Anzahl an Vertiefungen (2,12) einer Anzahl an Käfigstäben (4) entspricht.

3. Kurzschlussring (1,11) nach einem der Ansprüche 1 bis 2, wobei die Vertiefung (2,12) an einer dem Rotorpaket (5) zugewandten Rückseite (R) des Kurzschlussrings (1,11) ausgebildet ist.

4. Kurzschlussring (1,11) nach einem der Ansprüche 1 bis 3, wobei die Erhebung (3) spitz zulaufend ausgebildet ist, wobei eine Längsachse (LA) der Erhebung (3) wenigstens im Wesentlichen rechtwinklig zur Grundfläche (A2) der Vertiefung ausgebildet ist, wobei die Erhebung (3) in den Käfigstab (4) einstechbar ist.

5. Kurzschlussring (1,11) nach einem der Ansprüche 1 bis 4, wobei die Erhebung (3) als Dorn (3) ausgebildet ist.

6. Kurzschlussring (1,11) nach einem der Ansprüche 1 bis 2, wobei die Vertiefung (2,12) an einer dem Rotorpaket (5) abgewandten Vorderseite (V) des Kurzschlussrings (1,11) ausgebildet ist, wobei eine Öffnung (13) an einer Rückseite (R) des Kurzschlussrings (1,11) ausgebildet ist.

7. Kurzschlussring (1,11) nach einem der Ansprüche 1 bis 2 oder 6, wobei die Öffnung (13) an einer Grundfläche der Vertiefung (A12) ausgebildet ist.

8. Kurzschlussring (1,11) nach einem der Ansprüche 1 bis 2 oder 6 oder 7, wobei die Grundfläche der Vertiefung (A12) größer als eine Grundfläche der Öffnung (A13) ist.

9. Kurzschlussring (1,11) nach einem der Ansprüche 1 bis 2 oder 6 bis 8, wobei die Öffnung (13) und die Vertiefung (2,12) zu einer Aufnahme des Käfigstabs (4) ausgestaltet sind.

10. Verfahren zum Verbinden eines Kurzschlussrings (1,11) nach einem der Ansprüche 1 bis 5 mit wenigstens einem Käfigstab (4), vorzugsweise mit wenigstens zwei Käfigstäben (4), zur Bildung eines Kurzschlusskäfigs mit folgenden Schritten:
- Anordnen von Kurzschlussring (1,11) und Käfigstab (4) aneinander,
- Ausüben von Druckkraft auf den Kurzschlussring (1,11) mit einer Kraftwirkung wenigstens im Wesentlichen in Richtung der Maschinenachse (MA),
- Eindringen der spitz zulaufenden Erhebung (3) in den Käfigstab (4),
- Verformen des Käfigstabs (4) durch Stauchung,
- Erzeugen einer formschlüssigen Verbindung von Kurzschlussring (1,11) und Käfigstab (4).

11. Verfahren zum Verbinden eines Kurzschlussrings (1,11) nach einem der Ansprüche 1 bis 2 oder 6 bis 8 mit wenigstens einem Käfigstab (4), vorzugsweise mit wenigstens zwei Käfigstäben (4), zur Bildung eines Kurzschlusskäfigs mit folgenden Schritten:
- Führen des Käfigstabs (4) durch die Öffnung (13) und die Vertiefung (12) bis der Käfigstab (4) aus der Vertiefung (12) ragt,
- Ausüben von Druckkraft auf den Käfigstab (4) mit einer Kraftwirkung wenigstens im Wesentlichen in Richtung der Maschinenachse (MA),
- Verformen des Käfigstabs (4) durch Stauchung,
- Erzeugen einer formschlüssigen Verbindung von Kurzschlussring (1,11) und Käfigstab (4).

12. Verfahren nach einem der Ansprüche 10 oder 11, wobei der Kurzschlussring (1,11) und der Käfigstab (4) formschlüssig verbunden werden.

13. Verfahren nach einem der Ansprüche 10 bis 12, wobei die Vertiefung (2,12) vom verformten Käfigstab (4) nahezu vollständig oder vollständig gefüllt wird.

## Claims

1. Short-circuit ring (1,11) for a squirrel cage of a dynamoelectric rotary machine (M), wherein the short-circuit ring (1,11) has at least one indentation (2,12),
wherein the short-circuit ring (1,11) can be mechanically and electrically connected, by means of the indentation (2,12), to at least one cage bar (4) projecting from a rotor lamination (5) of the dynamoelectric rotary machine (M), wherein a protrusion (3) is embodied on a base area (A2) of the indentation, wherein the short-circuit ring (1,11) can be connected to the cage bar (4) by compressing the cage bar (4) by way of the protrusion (3).

2. Short-circuit ring (1,11) according to claim 1, wherein the short-circuit ring (1,11) has at least two indentations (2,12), wherein a number of indentations (2,12) corresponds to a number of cage bars (4).

3. Short-circuit ring (1,11) according to one of claims 1 to 2, wherein the indentation (2,12) is embodied on a rear side (R) of the short-circuit ring (1,11) facing the rotor lamination (5).

4. Short-circuit ring (1,11) according to one of claims 1 to 3, wherein the protrusion (3) is embodied such that it tapers to a point, wherein a longitudinal axis (LA) of the protrusion (3) is embodied at least substantially at right angles to the base area (A2) of the indentation, wherein the protrusion (3) is able to pierce into the cage bar (4).

5. Short-circuit ring (1,11) according to one of claims 1 to 4, wherein the protrusion (3) is embodied as a pin (3).

6. Short-circuit ring (1,11) according to one of claims 1 to 2, wherein the indentation (2,12) is embodied on a front side (V) of the short-circuit ring (1,11) facing away from the rotor lamination (5), wherein an opening (13) is embodied on a rear side (R) of the short-circuit ring (1,11).

7. Short-circuit ring (1,11) according to one of claims 1 to 2 or 6, wherein the opening (13) is embodied on a base area of the indentation (A12).

8. Short-circuit ring (1,11) according to one of claims 1 to 2 or 6 or 7, wherein the base area of the indentation (A12) is larger than a base area of the opening (A13).

9. Short-circuit ring (1,11) according to one of claims 1 to 2 or 6 to 8, wherein the opening (13) and the indentation (2,12) are configured to receive the cage bar (4).

10. Method for connecting a short-circuit ring (1,11) according to one of claims 1 to 5 to at least one cage bar (4), preferably to at least two cage bars (4), in order to form a squirrel cage, with the following steps:
- arranging short-circuit ring (1,11) and cage bar (4) against one another,
- exerting compressive force on the short-circuit ring (1,11) with a force effect at least substantially in the direction of the machine axis (MA),
- penetrating the protrusion (3) tapering to a point into the cage bar (4),
- deforming the cage bar (4) by way of compression,
- creating a positive-fit connection of short-circuit ring (1,11) and cage bar (4).

11. Method for connecting a short-circuit ring (1,11) according to one of claims 1 to 2 or 6 to 8 to at least one cage bar (4), preferably to at least two cage bars (4), in order to form a squirrel cage, with the following steps:
- guiding the cage bar (4) through the opening (13) and the indentation (12), until the cage bar (4) projects from the indentation (12),
- exerting compressive force on the cage bar (4) with a force effect at least substantially in the direction of the machine axis (MA),
- deforming the cage bar (4) by way of compression,
- creating a positive-fit connection of short-circuit ring (1,11) and cage bar (4).

12. Method according to one of claims 10 or 11, wherein the short-circuit ring (1,11) and the cage bar (4) are connected with a positive fit.

13. Method according to one of claims 10 to 12, wherein the indentation (2,12) is filled almost entirely, or entirely, by the deformed cage bar (4).

## Revendications

1. Bague (1, 11) de court-circuit d'une cage de court-circuit d'une machine (M) dynamoélectrique tournante, la bague (1, 11) de court-circuit ayant au moins un creux (2, 12),
dans laquelle la bague (1, 11) de court-circuit peut, au moyen du creux (2, 12), être reliée mécaniquement et électriquement à au moins une barre (4) de cage, en saillie du paquet (5) rotorique de la machine (M) dynamoélectrique tournante, dans laquelle sur une surface (A2) de base du creux est constituée une surélévation (3), dans laquelle la bague (1, 11) de court-circuit peut être reliée par la surélévation (3) à la barre (4) de la cage au moyen d'un refoulement de la barre (4) de la cage.

2. Bague (1, 11) de court-circuit suivant la revendication 1, dans laquelle la bague (1, 11) de court-circuit a au moins deux creux (2, 12), le nombre de creux (2, 12) correspondant au nombre de barres (4) de la cage.

3. Bague (1, 11) de court-circuit suivant l'une des revendications 1 à 2, dans laquelle le creux (2, 12) est constitué sur une face (R) arrière, tournée vers le paquet (5) rotorique, de la bague (1, 11) de court-circuit.

4. Bague (1, 11) de court-circuit suivant l'une des revendications 1 à 3, dans laquelle la surélévation (3) se termine en pointe, un axe (LA) longitudinal de la surélévation (3) étant constituée au moins sensiblement perpendiculairement à la surface (A2) de base du creux, la surélévation (3) pouvant être enfichée dans la barre (4) de la cage.

5. Bague (1, 11) de court-circuit suivant l'une des revendications 1 à 4, dans laquelle la surélévation (3) est constituée sous la forme d'un mandrin (3).

6. Bague (1, 11) de court-circuit suivant l'une des revendications 1 à 2, dans laquelle le creux (2, 12) est constitué sur une face (V) avant, loin du paquet (5) rotorique, de la bague (1, 11) de court-circuit, une ouverture (13) étant constituée sur une face (R) arrière de la bague (1, 11) de court-circuit.

7. Bague (1, 11) de court-circuit suivant l'une des revendications 1 à 2 ou 6, dans laquelle l'ouverture (13) est constituée sur une surface de base du creux (A12).

8. Bague (1, 11) de court-circuit suivant l'une des revendications 1 à 2 ou 6 ou 7, dans laquelle la surface de base du creux (A12) est plus grande qu'une surface de base de l'ouverture (A13).

9. Bague (1, 11) de court-circuit suivant l'une des revendications 1 à 2 ou 6 à 8, dans laquelle l'ouverture (13) et le creux (2, 12) sont conformés pour une réception de la barre (4) de la cage.

10. Procédé de liaison d'une bague (1, 11) de court-circuit suivant l'une des revendications 1 à 5, qui a au moins une barre (4) de cage, de préférence au moins deux barres (4) de cage, pour la formation d'une cage de court-circuit, comprenant les stades suivants :
- on met l'une contre l'autre une bague (1, 11) de court-circuit et une barre (4) de la cage,
- on applique une force de pression à la bague (1, 11) de court-circuit en ayant un effet de la pression au moins sensiblement dans la direction de l'axe (MA) de la machine,
- on enfonce la surélévation (3) se terminant en pointe dans la barre (4) de la cage,
- on déforme la barre (4) de la cage par refoulement,
- on produit une liaison à complémentarité de forme de la bague (1, 11) de court-circuit et de la barre (4) de la cage.

11. Procédé de liaison d'une bague (1, 11) de court-circuit suivant l'une des revendications 1 à 2 ou 6 à 8, qui a au moins une barre (4) de cage, de préférence à au moins deux barres (4) de cage, pour la formation d'une cage de court-circuit, comprenant les stades suivants :
- on fait passer la barre (4) de la cage dans l'ouverture (13) et dans le creux (12) jusqu'à ce que la barre (4) de la cage sorte du creux (12),
- on applique une force de pression à la barre (4) de la cage avec un effet de la pression au moins sensiblement dans la direction de l'axe (MA) de la machine,
- on déforme la barre (4) de la cage par refoulement,
- on produit une liaison à complémentarité de forme de la bague (1, 11) de court-circuit et de la barre (4) de la cage.

12. Procédé suivant l'une des revendications 10 ou 11, dans lequel on relie à complémentarité de forme la bague (1, 11) de court-circuit et la barre (4) de la cage.

13. Procédé suivant l'une des revendications 10 à 12, dans lequel on remplit complètement ou presque complètement le creux (2, 12) de la barre (4) de la cage déformée.
